# EUROPÄISCHE PATENTSCHRIFT

(11) **EP 2 239 522 B1**
(45) Veröffentlichungstag und Bekanntmachung des Hinweises auf die Patenterteilung: **13.05.2020**
(21) Anmeldenummer: 10002217.7
(22) Anmeldetag: 04.03.2010
(51) Int. Cl.: F24F 12/00

(54) **Dezentrales Zu- und Abluftgerät sowie Verfahren zum dezentralen Lüften und/oder Klimatisieren**
Decentralised ventilation and extraction device and method for decentralised ventilation and air conditioning
Appareil d'air frais et d'air vicié décentralisé ainsi que procédé d'aération et/ou de climatisation décentralisée

(30) Priorität: 28.03.2009 DE 102009015479
(43) Veröffentlichungstag der Anmeldung: 13.10.2010
(73) Patentinhaber: LTG Aktiengesellschaft, 70435 Stuttgart (DE)
(72) Erfinder: Wagner, Ralf, 70771 Leinfelden-Echterdingen (DE)
(74) Vertreter: Clarenbach, Carl-Philipp

(56) Entgegenhaltungen:
- WO-A1-89/05947
- WO-A1-98/01711
- WO-A2-2008/038250
- DE-A1-102005 055 378
- US-A- 5 179 998
- US-A1- 2004 123 616

## Beschreibung

Die Erfindung betrifft ein dezentrales Zu- und Abluftgerät für mindestens einen Raum eines Gebäudes oder dergleichen. Dieses Gerät kann Belüftungs- und/oder Klimatisierungsaufgaben wahrnehmen.

Im Bereich der Wohnungsbelüftung ist es bekannt, eine lüftungstechnische Anlage in die Wohnung einzubauen, mit der Raumluft nach außen abgeführt und Außenluft nach innen zugeführt werden kann. Mittels einer Wärmerückgewinnungseinrichtung lässt sich Wärme oder Kälte in der Abluft nutzen, indem sie der Außenluft zugeführt wird. Diese über die gesamte Wohnung angeordnete bekannte Anlage erfordert eine entsprechend aufwendige Montage.

Aus der Offenlegungsschrift DE 10 2005 055 378 A1 ist ein Paneel mit einem Innenraum aus Vakuum oder Latentspeicher gefüllt bekannt, das in/an einem Wärmerückgewinnungsgerät einsetzbar ist. Weiterhin ist aus der Offenlegungsschrift WO 2008/038250 A2 eine Luftbehandlungseinheit bekannt, die zur Entfeuchtung und Erwärmung von Luft ausgebildet ist. Des Weiteren ist aus der Druckschrift US 5,179,998 A ein Zu- und Abluftgerät bekannt, das mehrere Wärmetauscher aufweist. Aus der Offenlegungsschrift US 2004/0123616 A1 ist ein weiteres Klimaanlagensystem mit einem Wärmetauscher bekannt, ebenso wie aus der Offenlegungsschrift WO 98/05947 A1. Aus der Offenlegungsschrift WO 98/01711 A1 ist außerdem ein dezentrales Zu- und Abluftgerät mit mehreren Wärmetauschern bekannt, bei welchem mittels Steuerung von Bypass-Klappensystemen ein Teil eines Außenluft-Zuluftstroms und/oder eines Abluft-Fortluftstroms an einer der Wärmerückgewinnungseinheiten vorbeileitbar ist. Das Dokument zeigt die Merkmale des Oberbegriffs von Anspruch 1.

Der Erfindung liegt die Aufgabe zugrunde, eine Einrichtung zum Belüften und/oder Klimatisieren für mindestens einen Raum eines Gebäudes oder dergleichen zu schaffen, die einfach installierbar und aufgebaut ist und im System enthaltene Energie optimal nutzt.

Diese Aufgabe wird durch ein dezentrales Zu- und Abluftgerät mit den Merkmalen des Anspruchs 1 für mindestens einen Raum eines Gebäudes oder dergleichen erfüllt, mit einer in einem Zuluftweg liegenden Zuluftfördereinrichtung und mit einer in einem Abluftweg liegenden Abluftfördereinrichtung, wobei Zuluftweg und Abluftweg mittels einer Wärmerückgewinnungseinrichtung im Wärmetausch zueinander bringbar sind und im Zuluftweg mindestens ein Wärmespeicher angeordnet ist. Durch die Zusammenfassung der erforderlichen Baukomponenten in ein als Baueinheit vorliegendes Gerät, das dezentral aufgestellt ist und dezentral arbeitet, lässt sich eine derartige Einrichtung sehr einfach und schnell installieren. Auch sind Nachrüstungsarbeiten, also das Ausstatten von noch nicht mit lufttechnischen Einrichtungen versehenen Räumen, sehr einfach und schnell durchführbar. Da das erfindungsgemäße Zu- und Abluftgerät nicht nur eine Wärmerückgewinnungseinrichtung aufweist, um Wärmeenergie oder Kälteenergie der Abluft zu nutzen, indem sie der in den mindestens einen Raum zugeführten Außenluft zugeführt wird, sondern zusätzlich im Zuluftweg mindestens ein Wärmespeicher angeordnet ist, kann dieser Wärmespeicher Wärmeenergie der Außenluft oder auch Kälteenergie der Außenluft speichern und diese Energie lässt sich zu einem späteren Zeitpunkt nutzen, wodurch eine optimale klimatechnische und energietechnische Betriebsführung möglich ist und Energiekosten gespart werden können. Aufgrund des erfindungsgemäßen Geräts lässt sich die Kälte/Wärme der Außenluft speichern und nutzen. Darüber hinaus wird die Kälte/Wärme der Abluft genutzt. Insbesondere benötigen nur die Zuluftfördereinrichtung und die Abluftfördereinrichtung Energie. Grundsätzlich ist keine Installation eines Wasserkreislaufs erforderlich.

Nach einer Weiterbildung der Erfindung ist vorgesehen, dass der Wärmespeicher ein Phasenübergangswärmespeicher ist. Der Wärmespeicher weist vorzugsweise mindestens eine Speichermasse auf. Diese besteht insbesondere aus mindestens einem Phasenübergangsmaterial. Derartige Phasenübergangswärmespeicher können bei einer definierten Temperatur eine sehr große Energiemenge speichern, sodass bei kleiner Bauform große Wärmemengen/Kältemengen zur Verfügung gestellt werden können.

Nach einer Weiterbildung der Erfindung ist vorgesehen, dass der Zuluftweg einen die Wärmerückgewinnungseinrichtung wahlweise umgehenden, weiteren Bypass aufweist. Damit ist zum Beispiel eine Nutzung mit freier Kühlung möglich oder es kann beispielsweise eine Regelung der Zulufttemperatur (Temperatur der Außenluft) erfolgen.

Erfindungsgemäß ist vorgesehen, dass der Zuluftweg einen den Wärmespeicher wahlweise umgehenden, Bypass aufweist. Dieser Bypass kann zum Beispiel zur Nutzung einer freien Kühlung verwendet werden. Es besteht beispielsweise auch die Möglichkeit, mittels des Bypasses eine Regelung der Zulufttemperatur (Temperatur der Außenluft) zu erzielen. Anstelle der zum Bypass und/oder zum weiteren Bypass genannten Regelung kann auch eine Steuerung vorgesehen sein, beziehungsweise eine Kombination von Steuerung und Regelung.

Erfindungsgemäß ist vorgesehen, dass der Abluftweg über eine Umluftfördereinrichtung mit dem Zuluftweg strömungstechnisch verbunden ist. Hierdurch ist insbesondere eine effektive Ladung des Wärmespeichers möglich. Dabei wird vorausgesetzt, dass die Umluftfördereinrichtung Luft über den Wärmespeicher fördert. Durch die Umluftfördereinrichtung wird Raumluft aus dem Raum gefördert, lufttechnisch behandelt, insbesondere über den Wärmespeicher geleitet, und anschließend dem Raum wieder zugeführt.

Erfindungsgemäß ist weiter vorgesehen, dass die Umluftfördereinrichtung zwischen der Wärmerückgewinnungseinrichtung und dem Wärmespeicher in den Zuluftweg strömungstechnisch einmündet. Dabei ist - in Richtung der Strömung im Zuluftweg gesehen - der Wärmespeicher strömungstechnisch der Wärmerückgewinnungseinrichtung nachgeordnet.

Inbesondere kann vorgesehen sein, dass der Zuluftweg einen Au-βenlufteinlass aufweist. Dadurch kann als zugeführte Luft Außenluft verwendet werden. Der Außenlufteinlass kann insbesondere an der Fassade des Raumes angeordnet sein. Es ist vorteilhaft, wenn das dezentrale Zu- und Abluftgerät im Bereich der Fassade des Raums angeordnet ist, sodass sich nur eine sehr kurze Luftleitungslänge zum Außenlufteinlass ergibt.

Eine Weiterbildung der Erfindung sieht vor, dass der Außenlufteinlass mittels einer ersten Verschlusseinrichtung, insbesondere einer ersten Luftklappe, im Querschnitt einstellbar und/oder schließbar und/oder zu öffnen ist. Diese erste Verschlusseinrichtung ermöglicht somit das Absperren des Außenlufteinlasses, beispielsweise wenn das dezentrale Zu- und Abluftgerät nicht in Betrieb ist. Im Betrieb des Gerätes wird die erste Verschlusseinrichtung geöffnet, insbesondere vollständig geöffnet, oder es ist auch möglich, sie nur teilweise gesteuert oder geregelt zu öffnen, um dadurch die angesaugte Außenluftmenge zu bestimmen.

Nach einer Weiterbildung der Erfindung ist vorgesehen, dass stromabwärts des Außenlufteinlasses ein Zuluftfilter angeordnet ist. Hierdurch wird die angesaugte Außenluft gereinigt.

Ferner ist es vorteilhaft, wenn die Zuluftfördereinrichtung zwischen der ersten Verschlusseinrichtung und der Wärmerückgewinnungseinrichtung, insbesondere zwischen dem Zuluftfilter und der Wärmerückgewinnungseinrichtung, liegt. Damit ist - strömungstechnisch gesehen - die Zuluftfördereinrichtung relativ nahe am Außenlufteinlass und stromaufwärts der Wärmerückgewinnungseinrichtung angeordnet.

Nach einer Weiterbildung der Erfindung ist vorgesehen, dass - in Strömungsrichtung des Zuluftwegs betrachtet - der Wärmespeicher stromabwärts zur Wärmerückgewinnungseinrichtung liegt. Hierauf wurde bereits vorstehend schon eingegangen. Vom Außenlufteinlass kommende Außenluft durchströmt somit zunächst die Wärmerückgewinnungseinrichtung und wird dort mittels der Wärmeenergie beziehungsweise Kälteenergie der abgeführten Raumluft beaufschlagt. Derart behandelte Außenluft durchströmt danach den Wärmespeicher. Nach Durchströmen des Wärmespeichers, der je nach Temperatur natürlich stets auch als Kältespeicher bezeichnet werden kann, gelangt die entsprechend wärmebehandelte beziehungsweise kältebehandelte Luft in den Raum.

Eine Weiterbildung der Erfindung sieht vor, dass stromabwärts des Wärmespeichers ein Wärmetauscher angeordnet ist. Hierbei handelt es sich um eine besondere Ausführungsform des erfindungsgemäßen dezentralen Zu- und Abluftgeräts, da ein derartiger Wärmetauscher an einen zu installierenden Wasserkreislauf (Kaltwasser und/oder Warmwasser) angeschlossen werden muss. Es ist natürlich auch denkbar, dass der Wärmetauscher mit einem anderen Medium betrieben wird und/oder als Luftbehandlungselement im Sinne einer Zusatzheizung oder eines Kühlaggregats, zum Beispiel elektrisch betrieben, ausgebildet ist.

Ferner ist es nach einer Weiterbildung der Erfindung vorteilhaft, wenn zwischen dem Wärmespeicher und einem in den Raum führenden Außenluftauslass der Wärmetauscher liegt. Er ist demzufolge - längs des Zuluftwegs betrachtet - kurz vor dem Austritt der Außenluft in den Raum angeordnet.

Es ist vorzugsweise gemäß einer Weiterbildung Erfindung vorgesehen, dass stromabwärts des Wärmespeichers ein Zuluftschalldämpfer liegt. Hierdurch wird ein möglichst geräuscharmer Betrieb des dezentralen Zu- und Abluftgeräts ermöglichet. Mithin weist der Zuluftweg an der genannten Stelle den Zuluftschalldämpfer auf.

Insbesondere kann nach einer Weiterbildung vorgesehen sein, dass der Zuluftschalldämpfer zwischen dem Wärmespeicher und dem Wärmetauscher oder dem Außenluftauslass liegt. Er kann stromaufwärts des Wärmetauschers oder stromabwärts des Wärmetauschers liegen.

Nach einer Weiterbildung der Erfindung ist vorgesehen, dass der Abluftweg einen Raumlufteinlass aufweist. Dieser dient zur Abführung der Raumluft.

Nach einer Weiterbildung der Erfindung kann stromabwärts des Raumlufteinlasses ein Abluftschalldämpfer angeordnet sein. Dieser befindet sich somit im Abluftweg.

Insbesondere kann nach einer Weiterbildung vorgesehen sein, dass sich der Abluftschalldämpfer zwischen dem Raumlufteinlass und der Wärmerückgewinnungseinrichtung befindet.

Nach einer Weiterbildung der Erfindung ist vorgesehen, dass stromaufwärts der Wärmerückgewinnungseinrichtung ein Abluftfilter liegt. Dieser befindet sich im Abluftweg. Demzufolge gelangt nur gereinigte Abluft in die Wärmerückgewinnungseinrichtung. Bei der genannten Abluft handelt es sich um Raumluft.

Eine Weiterbildung der Erfindung sieht vor, dass ein zur Umluftfördereinrichtung führender Abgang/Abzweig des Abluftwegs zwischen Raumlufteinlass und Wärmerückgewinnungseinrichtung, insbesondere zwischen dem Abluftschalldämpfer und der Wärmerückgewinnungseinrichtung, zwischen dem Raumlufteinlass und dem Abluftfilter oder zwischen dem Abluftschalldämpfer und dem Abluftfilter, liegt. Die genannten verschiedenen Varianten ergeben sich insbesondere dadurch, dass Abluftfilter und/oder Abluftschalldämpfer optional vorgesehen sein können. Grundsätzlich ist die Anordnung jedoch derart getroffen, dass mittels der Umluftfördereinrichtung ein Umluftstrom geführt wird, der den Wärmespeicher und/oder den Wärmetauscher passiert.

Eine Weiterbildung der Erfindung sieht vor, dass die Abluftfördereinrichtung stromabwärts zur Wärmerückgewinnungseinrichtung liegt. Demzufolge ist die Abluftfördereinrichtung relativ weit am Ende des Abluftwegs des dezentralen Zu- und Abluftgeräts angeordnet.

Nach einer Weiterbildung der Erfindung ist vorgesehen, dass der Abluftweg einen nach außen führenden Abluftauslass aufweist. Der Abluftauslass kann nahe dem Außenlufteinlass angeordnet sein. Dabei ist jedoch Sorge dafür zu tragen, dass über den Außenlufteinlass keine Abluft angesaugt wird, die den Abluftauslass verlässt.

Eine Weiterbildung der Erfindung sieht vor, dass der Abluftauslass mittels einer zweiten Verschlusseinrichtung, insbesondere einer zweiten Verschlußklappe/Luftklappe, im Querschnitt einstellbar, verschließbar und/oder zu öffnen ist. Damit lässt sich der Abluftweg verschließen oder - im Betrieb - öffnen. Zusätzlich oder alternativ sind auch verschiedene Zwischenstellungen denkbar, um den Abluftquerschnitt einzustellen. Dies kann steuernd oder regelnd erfolgen.

Ferner ist es nach einer Weiterbildung der Erfindung vorteilhaft, wenn die Abluftfördereinrichtung zwischen der Wärmerückgewinnungseinrichtung und der zweiten Verschlusseinrichtung oder dem Abluftauslass liegt.

Nach einer Weiterbildung der Erfindung ist vorgesehen, dass die erste Verschlusseinrichtung und/oder die zweite Verschlusseinrichtung motorisch verstellbar ist/sind. Hierdurch ist eine motorische Betriebsführung des dezentralen Zu- und Abluftgeräts insoweit möglich.

Nach einer Weiterbildung der Erfindung ist vorgesehen, dass die Zuluftfördereinrichtung, die Abluftfördereinrichtung und/oder die Umluftfördereinrichtung als Ventilator beziehungsweise jeweils als Ventilator ausgebildet ist/sind. Hierdurch ergibt sich ein einfacher Aufbau und Betrieb. Die Drehzahl von mindestens einem der Ventilatoren kann steuernd und/oder regelnd einstellbar sein.

Die Erfindung betrifft ferner ein Verfahren zum dezentralen Lüften und/oder dezentralen Klimatisieren mindestens eines Raumes eines Gebäudes oder dergleichen, insbesondere unter Verwendung eines Zu- und Abluftgeräts gemäß vorstehender Erläuterungen, bei dem Außenluft dem Raum zugeführt und Raumluft als Abluft nach außen abgeführt wird und wobei Kälteenergie oder Wärmeenergie der Abluft zum Kühlen oder Erwärmen der Außenluft verwendet wird und Kälteenergie oder Wärmeenergie der Außenluft gespeichert und bei Bedarf für die Kühlung oder Erwärmung der in den Raum geführten Luft, insbesondere Außenluft, genutzt wird.

Dabei kann vorzugsweise vorgesehen sein, dass Raumluft als mit der gespeicherten Kälteenergie oder der gespeicherten Wärmeenergie behandelte Umluft in den Raum zurückgeführt wird. Das Speichern von Wärmeenergie beziehungsweise Kälteenergie erfolgt insbesondere mittels eines Wärmespeichers. Durch das Hindurchleiten von Außenluft durch den Wärmespeicher wird die Außenluft behandelt und es wird der Speicher geladen oder entladen. Entsprechendes gilt für den Umluftbetrieb, bei dem Raumluft über den Wärmespeicher in den Raum zurückgeführt wird. Beide Möglichkeiten lassen sich auch kombinieren.

Es ist möglich, beim Umluftbetrieb Außenluft zuzuführen, das heißt, es entsteht Mischluft, die teilweise aus Raumluft und teilweise aus Außenluft besteht und in den Raum eingebracht wird.

Die Zeichnungen veranschaulichen die Erfindung anhand von Ausführungsbeispielen, und zwar zeigt:
- Figur 1: ein Zu- und Abluftgerät mit verschiedenen, teilweise optionalen Baugruppen,
- Figuren 2 bis 7: das Gerät der Figur 1 in unterschiedlichen Betriebszuständen, wobei Details, wie beispielsweise das Gehäuse des Geräts nicht dargestellt sind und
- Figuren 8 bis 11: ein praxisgerecht aufgebautes und eingesetztes Zu- und Abluftgerät, teilweise in Detaildarstellung.

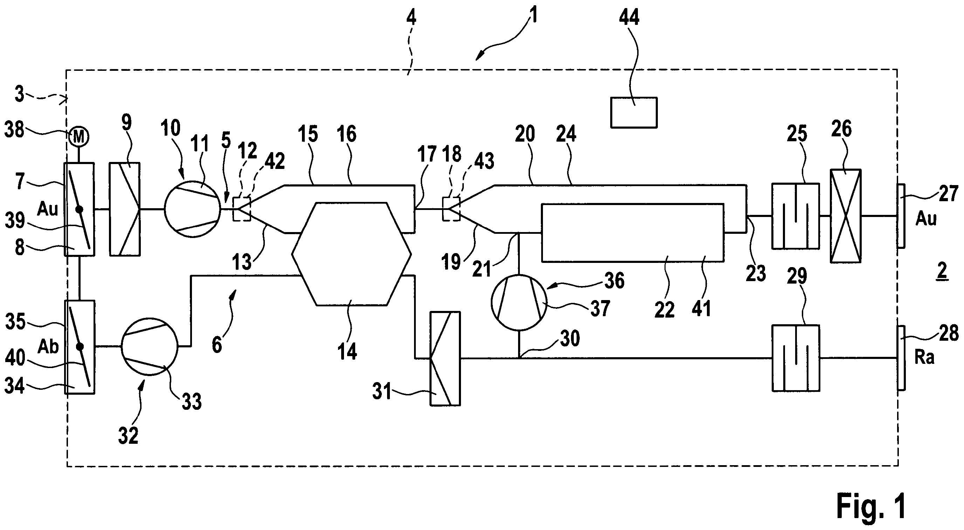

Die Figur 1 zeigt ein Zu- und Abluftgerät 1, das als dezentrales Gerät ausgebildet ist und zum Lüften und/oder Klimatisieren eines Raums 2 (nicht näher dargestellt) eines Gebäudes oder dergleichen dient. "Dezentrales Zu- und Abluftgerät" bedeutet, dass es autark für sich arbeitet und nicht an eine Luftzentrale des Gebäudes angeschlossen werden muss. Vorzugsweise wird es derart im Raum 2 installiert, dass es mit einer Stirnseite 3 seines Gehäuses 4 nahe an einer Fassade des Raumes 2 liegt oder sogar in die Fassade integriert ist, um als Zuluft Außenluft auf kurzem Zuführungswege zu verwenden und Abluft, nämlich Raumluft des Raumes 2, auf kurzem Wege nach außen zu befördern.

Das Zu- und Abluftgerät 1 weist einen Zuluftweg 5 und einen Abluftweg 6 auf. Der Zuluftweg 5 weist - in Strömungsrichtung der zugeführten Luft, also der Außenluft, gesehen - einen Außenlufteinlass 7 für den Eintritt von Außenluft Au auf, an den sich eine erste Verschlusseinrichtung 8 anschließt. Es folgt ein Zuluftfilter 9, an den sich eine Zuluftfördereinrichtung 10 anschließt, die als Zuluftventilator 11 ausgebildet ist. Es folgt eine in den Querschnitten einstellbare Verzweigungsstelle 12, sodass der Zuluftweg 5 einen Verzweigungsweg 13 und einen Verzweigungsweg 15 aufweist. Der Verzweigungsweg 13 führt durch eine Wärmerückgewinnungseinrichtung 14 und der Verzweigungsweg 15 bildet einen ersten Bypass 16, der die Wärmerückgewinnungseinrichtung 14 umgeht. Die beiden Verzweigungswege 13 und 15 treffen an einer Einmündung 17 wieder zusammen, sodass dort wieder ein gemeinsamer Zuluftweg 5 vorliegt. Dieser führt zu einem in den Querschnitten einstellbaren Verzweigungspunkt 18, das heißt, der Zuluftweg 5 teilt sich wiederum in zwei Wege auf, nämlich in einen Verzweigungsweg 19 und einen Verzweigungsweg 20. Sowohl bei der Verzweigungsstelle 12 als auch bei dem Verzweigungspunkt 18 liegt jeweils die Möglichkeit vor, das Querschnittsverhältnis von Verzweigungsweg 13 zu Verzweigungsweg 15 beziehungsweise Verzweigungsweg 19 zu Verzweigungsweg 20 stufenlos und individuell einzustellen. Dies kann steuernd oder regelnd erfolgen. Vorzugsweise sind Verzweigungsstelle 12 und Verzweigungspunkt 18 jeweils mit entsprechender Stellklappe 42, 43 ausgebildet, die eine Steuerklappe beziehungsweise Reglerklappe sein kann. Je nach Einstellung der Querschnitte ist bezüglich der Verzweigungsstelle 12 der Verzweigungsweg 13 geschlossen und der Verzweigungsweg 15 vollständig geöffnet oder umgekehrt. Zwischen diesen Extremstellungen sind beliebige Zwischenstellungen denkbar. Entsprechendes gilt für die Querschnittseinstellungen der Verzweigungswege 19 und 20.

Der Verzweigungsweg 19 führt über eine Einmündung 21 und durch einen Wärmespeicher 22 hindurch zu einer Einmündung 23. Der Verzweigungsweg 20 stellt einen zweiten Bypass 24 dar, der den Wärmespeicher 22 umgeht und bis zur Einmündung 23 führt. Von der Einmündung 23 führt der Zuluftweg 5 zu einem Zuluftschalldämpfer 25 und von dort über einen Wärmetauscher 26 zu einem in den Raum 2 führenden Außenluftauslass 27.

Der Abluftweg 6 weist einen im Raum 2 liegenden Raumlufteinlass 28 für Raumluft Ra auf, an den sich - in Strömungsrichtung betrachtet - ein Abluftschalldämpfer 29 anschließt, der über einen Abzweig 30 zu einem Abluftfilter 31 führt. Der Abluftweg 6 führt vom Abluftfilter 31 über die Wärmerückgewinnungseinrichtung 14 zu einer Abluftfördereinrichtung 32, die als Abluftventilator 33 ausgebildet ist. Stromabwärts der Abluftfördereinrichtung 32 führt der Abluftweg 6 zu einer zweiten Verschlusseinrichtung 34, an die sich ein nach außen führender Abluftauslass 35 anschließt. Zwischen dem Abzweig 30 und der Einmündung 21 liegt eine Umluftfördereinrichtung 36, die als Umluftventilator 37 ausgebildet ist. Mittels einer motorischen Stelleinrichtung 38 lassen sich die erste Verschlusseinrichtung 8 und/oder die zweite Verschlusseinrichtung 34 in ihrem Querschnitt einstellen, insbesondere kann eine volle Offenstellung und eine Schließstellung erzielt werden. Hierzu weist die erste Verschlusseinrichtung 1 vorzugsweise eine erste Verschlussklappe 39 und die zweite Verschlusseinrichtung 34 vorzugsweise eine zweite Verschlussklappe 40 auf. Die Anordnung kann derart getroffen sein, dass Außenlufteinlass 7 und/oder Außenluftauslass 27 und/oder Raumlufteinlass 28 und/oder Abluftauslass 35 als Baugruppen am Gehäuse 4 des Zu- und Abluftgeräts 1 angeordnet sind oder Bauelementen der Fassade beziehungsweise des Raums 2 angehören.

Ferner ist zu erwähnen, dass der in den Querschnitten einstellbare Verzweigungspunkt 18 nebst zweitem Bypass 24, Zuluftschalldämpfer 25, Wärmetauscher 26, Abluftschalldämpfer 29, Umluftfördereinrichtung 36 und/oder Abluftfilter 31 als optionale Baugruppe/Baugruppen des Zu- und Abluftgeräts 1 anzusehen ist/sind und jeweils oder in Kombination, auch in beliebiger Kombination, nur bei Bedarf vorhanden ist/sind.

Die Wärmerückgewinnungseinrichtung 14 wird sowohl vom Zuluftweg 5 als auch vom Abluftweg 6 durchsetzt, wobei diese beiden Wege jedoch strömungstechnisch nicht miteinander verbunden sind. Es erfolgt lediglich ein Wärmeaustausch beziehungsweise ein Kälteaustausch zwischen den beiden genannten Wegen. Der Wärmespeicher 22 ist bevorzugt als Phasenübergangswärmespeicher 41 ausgebildet, das heißt, er weist mindestens eine Speichermasse auf, die mindestens ein Phasenübergangsmaterial (PCM) aufweist. Verzweigungsstelle 12 und Verzweigungspunkt 18 sind jeweils mit der Stellklappe 42 beziehungsweise Stellklappe 43 versehen, um entsprechende Querschnitte von Verzweigungsweg 13 und Verzweigungsweg 15 beziehungsweise Verzweigungsweg 19 und Verzweigungsweg 20 einzustellen beziehungsweise entsprechende Wege ganz zu öffnen und dabei die zugeordneten anderen Wege zu verschließen. Das Zu- und Abluftgerät 1 weist ferner eine nicht näher dargestellte Steuer- beziehungsweise Regeleinrichtung 44 auf, die unter anderem die Stelleinrichtung 38 beziehungsweise die erste Verschlusseinrichtung 9 beziehungsweise die zweite Verschlusseinrichtung 34, die Drehzahlen von Zuluftventilator 11, Abluftventilator 33 und Umluftventilator 37 sowie die Stellklappen 42 und 43 steuern und/oder regeln. Die Steuer- beziehungsweise Regeleinrichtung 44 betreibt ferner - sofern vorhanden - den Wärmetauscher 26, der an eine Kaltwasserquelle beziehungsweise Warmwasserquelle angeschlossen ist, sodass die ihn durchströmende Luft gekühlt oder erwärmt werden kann.

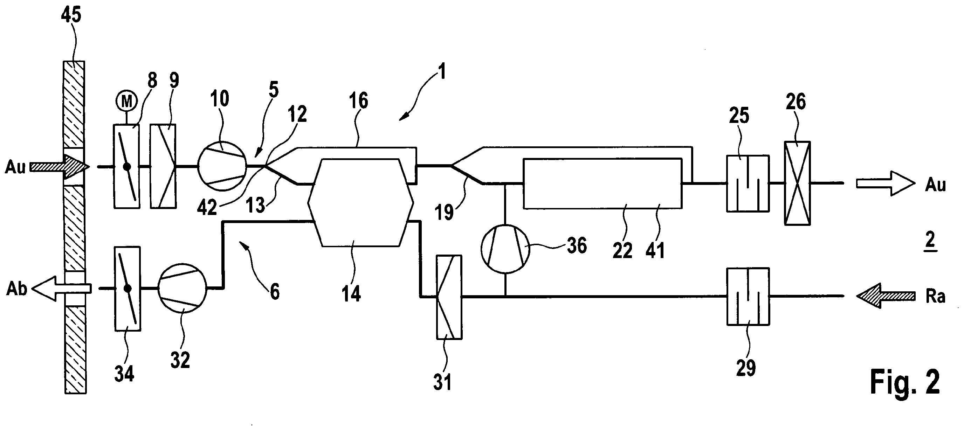

Die Figur 2 zeigt die Anordnung der Figur 1 im Betriebszustand "Winter". Dargestellt ist eine Fassade 45 des Raumes 2, wobei durch eine Öffnung der Fassade Außenluft Au dem Zu- und Abluftgerät 1 zugeführt und Abluft Ab durch eine entsprechende Öffnung der Fassade 45 abgeführt werden kann. Der aktive Luftweg ist im Zuluftweg 5 und im Abluftweg 6 jeweils mit mitteldicker Strichstärke dargestellt. Die nicht aktiven Wege sind mit dünner Strichstärke gekennzeichnet. Diese Kennzeichnungen gelten für alle Ausführungsbeispiele. Es ist erkennbar, dass Außenluft Au über die erste Verschlusseinrichtung 8, den Zuluftfilter 9, die im Betrieb befindliche Zuluftfördereinrichtung 10, den Verzweigungsweg 13, die Wärmerückgewinnungseinrichtung 14, den Verzweigungsweg 19, den Wärmespeicher 22, den Zuluftschalldämpfer 25 und den optional vorhandenen Wärmetauscher 26 in den Raum 2 gelangt. Raumluft Ra wird aus dem Raum 2 herausgefördert und strömt dabei über den Abluftschalldämpfer 29, den Abluftfilter 31, die Wärmerückgewinnungseinrichtung 14, die im Betrieb befindliche Abluftfördereinrichtung 32 und die zweite Verschlusseinrichtung 34 als Abluft Ab nach außen. Der Raum 2 hat Heizbedarf, da beispielsweise davon auszugehen ist, dass die Außenluft eine Temperatur von -10°C aufweist, wobei der Volumenstrom der angesaugten Außenluft Au aufgrund der tiefen Temperatur möglichst klein ist, jedoch hinreichend groß, um ausreichend Frischluft dem Raum 2 zur Verfügung zu stellen. Es wird davon ausgegangen, dass die Temperatur der Raumluft 22°C beträgt, sodass bei einer Arbeitsweise der Wärmerückgewinnungseinrichtung 14 von 70% die -10°C kalte Außenluft auf +12,4°C erwärmt wird. Dies ergibt sich dadurch, dass eine Erwärmung der Außenluft Au auf die Temperatur der Raumluft Ra eine 100% Arbeitsweise der Wärmeübertragungseinrichtung 14 bedeuten würde, die jedoch nur 70% beträgt und demzufolge zu 12,4°C führt. Die Umluftfördereinrichtung 36 ist außer Betrieb. Mittels des Wärmetauschers 26 kann - sofern er vorhanden ist - eine Nachheizung der Außenluft Au erfolgen. Der Wärmespeicher 22, der insbesondere als Phasenübergangswärmespeicher 41 ausgebildet ist, dämpft Temperaturschwankungen der zugeführten Außenluft Au im Tagesgang, das heißt, er wirkt quasi als Temperaturänderungsdämpfungsglied. Der Wärmespeicher 22 wird beispielsweise in der Zeit sehr kalter Außentemperaturen entladen, wobei derart kalte Außentemperaturen beispielsweise frühmorgens vorliegen. Bei den vorstehenden Ausführungen wird davon ausgegangen, dass der Wärmespeicher 22 einen bestimmten Ladezustand aufweist, sodass er bei niedrigeren Temperaturen der zugeführten Außenluft erwärmend wirkt und bei höheren Temperaturen kühlend, wobei er dadurch entladen wird.

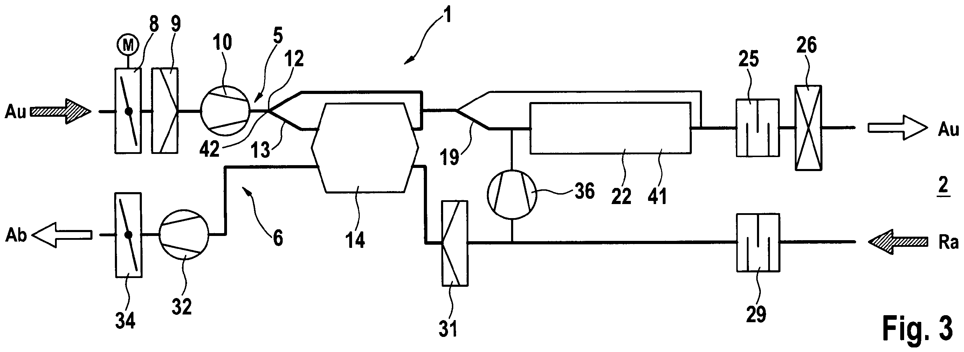

Die Figur 3 zeigt die Anordnung der Figur 2 im Betriebszustand "Übergangszeit". Im Zuluftweg 5 ist - in Ergänzung zur Situation in der Figur 2 - in der Verzweigungsstelle 12 die dort vorhandene Stellklappe 42 derart eingestellt, dass zum Beispiel 25 % der Außenluft Au durch den ersten Bypass 16 strömen und demzufolge 75% der Außenluft Au die Wärmerückgewinnungseinrichtung 14 passieren. Die Situation im Abluftweg 6 der Figur 3 entspricht der in der Figur 2. Die aktiven Luftwege im Ausführungsbeispiel der Figur 3 sind wiederum mit mitteldicker Strichstärke dargestellt. Es wird davon ausgegangen, dass der Raum 2 einen Kühlbedarf hat. Es wird mit der Zuluftfördereinrichtung 10 beispielsweise ein Nennvolumenstrom Außenluft mit +10°C gefördert. Die Temperatur der abgeführten Raumluft liegt beispielsweise bei 24°C. Bei einer Arbeitsweise der Wärmerückgewinnungseinrichtung 14 mit 70% führt dies zur Erwärmung der die Wärmerückgewinnungseinrichtung 14 durchströmenden Außenluft von 10°C auf 19,8°C. Die Anordnung ist derart getroffen, dass die Stellklappe 42 stetig regelnd, also stufenlos arbeitend, die Austrittstemperatur der Außenluft Au aus der Wärmerückgewinnungseinrichtung 14 regelt. Diese 19,8°C warme Außenluft Au trifft mit der nicht erwärmten Außenluft Au des ersten Bypasses 10 zusammen, wodurch sich eine Mischlufttemperatur von 17,4°C ergibt. Mit dieser Temperatur tritt die Außenluft Au in den Wärmespeicher 22 ein, der - wie bei sämtlichen Ausführungsbeispielen dieser Patentanmeldung - als Phasenübergangswärmespeicher 41 ausgebildet sein kann. Die Umluftfördereinrichtung 36 ist außer Betrieb. Eine Nachheizung im Wärmetauscher 26 ist nicht erforderlich. Der Wärmespeicher 22 dämpft wiederum die Außenlufttemperaturschwankungen im Tagesgang, wobei er während Perioden kalter Außentemperaturen entladen und bei wärmeren Außentemperaturen geladen wird. Das Abführen von Raumluft Ra aus dem Raum 2 als Abluft Ab ins Freie erfolgt wie bereits beim Ausführungsbeispiel der Figur 2 beschrieben.

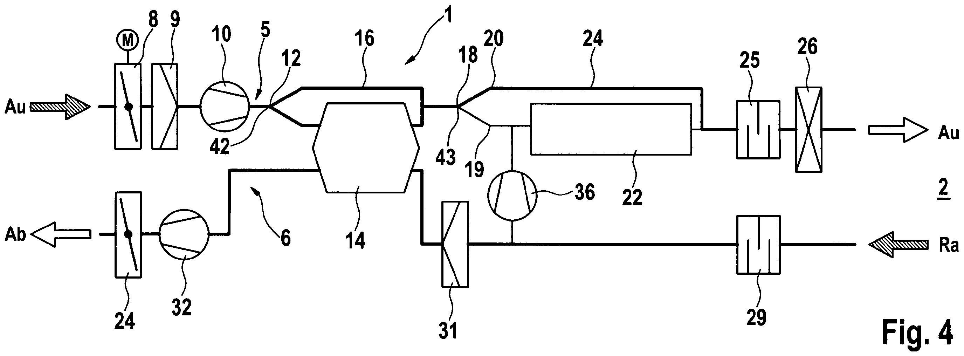

Die Figur 4 zeigt das Zu- und Abluftgerät 1 im Betriebszustand "Freie Kühlung", wobei hinsichtlich des Zuluftwegs 5 auf den Zustand gemäß Figur 3 verwiesen wird. Unterschiedlich zu diesem Zustand ist lediglich, dass der Wärmespeicher 22 umgangen wird, indem im Verzweigungspunkt 18 die Stellklappe 43 den Verzweigungsweg 19 sperrt und den zweiten Bypass 24 vollständig öffnet. Ansonsten entsprechen die Verhältnisse dem Ausführungsbeispiel der Figur 3. Dies gilt auch für den Abluftweg 6. Der Betriebszustand "Freie Kühlung" zeichnet sich demzufolge dadurch aus, dass die Wärmerückgewinnungseinrichtung 14 teilweise umgangen wird, das heißt, der erste Bypass 16 führt einen Anteil der zugeführten Außenluft Au. Der andere Anteil der Außenluft Au durchströmt die Wärmerückgewinnungseinrichtung 14. Auch hier wird beispielsweise von einem Verhältnis von 25/75 ausgegangen, das heißt, 25% des Volumenstroms durchströmen den ersten Bypass 16 und 75% die Wärmerückgewinnungseinrichtung 14. Eine kontinuierliche Regelung mittels Stellklappe 42 ist gewährleistet. Es wird davon ausgegangen, dass der Raum 2 Kühlbedarf hat. Der Volumenstrom der angesaugten Außenluft Au entspricht dem Nennvolumenstrom, wobei die Außenluft Au beispielsweise eine Temperatur von +10°C aufweist. Die abgeführte Raumluft hat beispielsweise eine Temperatur von 24°C. Bei einer Arbeitsweise der Wärmerückgewinnungseinrichtung 14 von 70% ergibt sich eine Außenlufttemperatur von 19,8°C stromabwärts der Wärmerückgewinnungseinrichtung 14, was im Verzweigungspunkt 18 zu einer Außenlufttemperatur von 17,4°C führt. Die Außenluft Au wird mit dieser Temperatur - unter Umgehung des Wärmespeichers 22 - dem Raum 2 zugeführt, da keine Nachheizung mittels des Wärmetauschers 26 erfolgen muss. Die Umluftfördereinrichtung 36 ist außer Betrieb. Da insbesondere lange Luftwege im Wärmespeicher 22 aufgrund des zweiten Bypasses 24 umgangen werden, steht die Außenluft Au unmittelbar und sehr schnell zur Kühlung des Raumes 2 zur Verfügung.

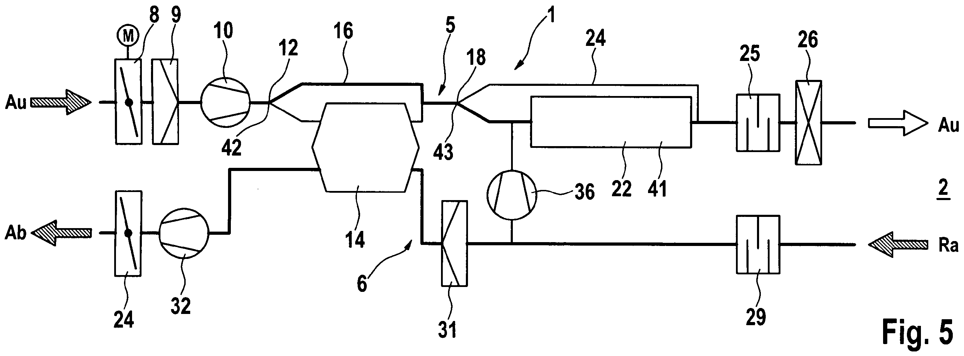

Die Figur 5 zeigt das Zu- und Abluftgerät 1 im Betriebszustand "Sommernacht". Es wird auf die Ausführungen zum Ausführungsbeispiel der Figur 2 verwiesen. Unterschiedlich ist lediglich, dass an der Verzweigungsstelle 12 die dort vorhandene Stellklappe 42 derart eingestellt ist, dass nicht - wie in Figur 2 - die Wärmerückgewinnungseinrichtung 14, sondern nur der erste Bypass 16 von Außenluft Au durchströmt wird. Insgesamt ergibt sich daraus, dass die in den Raum 2 zugeführte Außenluft Au nicht mittels der Wärmerückgewinnungseinrichtung 14 erwärmt, sondern mit ihrer relativ kühlen Temperatur durch den Wärmespeicher 22 strömt, das heißt die Außenluft kühlt die Speichermasse in der Temperatur herunter, wobei dennoch relativ kühle Außenluft in den Raum 2 gelangt. Also erfolgt ein Kühlvorgang des Wärmespeichers 22, vorzugsweise Phasenübergangswärmespeichers 41, und es erfolgt eine Nachtauskühlung des Raums 2. Die Außenluft Au wird mit maximalem Volumenstrom bei zum Beispiel einer Temperatur von +14°C zugeführt. Die Abluft, also die Raumluft Ra hat beispielsweise eine Temperatur von 22°C. Der erste Bypass 16 der Wärmerückgewinnungseinrichtung 14 ist aktiv. Die Außenluft Au tritt mit Außenlufttemperatur in den Wärmespeicher 22 ein. Die Umluftfördereinrichtung 36 ist nicht aktiv. Eine Nachheizung im Wärmetauscher 26 erfolgt nicht. Sinkt während der Nacht die Außentemperatur der Außenluft Au noch ab, so führt dies zu einem Entladen des Wärmespeichers 22.

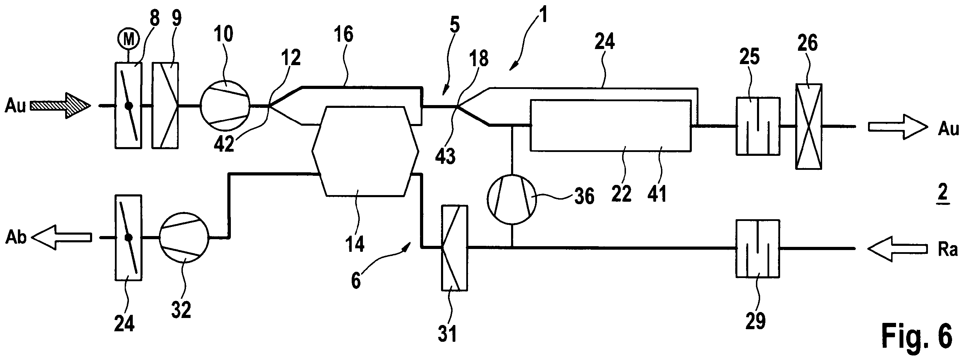

Die Figur 6 zeigt ein Zu- und Abluftgerät 1 im Betriebszustand "Milder Sommertag". Die - ebenso wie beim Ausführungsbeispiel der Figur 5 - mit mitteldicker Strichstärke dargestellten aktiven Luftwege entsprechen der Situation in der Figur 5, sodass auf die zugehörige Beschreibung verwiesen wird. Es ergibt sich beispielsweise folgende Situation: Der Raum 2 erfordert eine Kühlung. Der zugeführte Volumenstrom der Außenluft Au entspricht dem Nennstrom und weist beispielsweise eine Temperatur (außen) von +30°C auf. Die Abluft (Raumluft Ra) weist zum Beispiel eine Temperatur von 26°C auf. Die Wärmerückgewinnungseinrichtung 14 ist nicht aktiv, da der erste Bypass 16 eingeschaltet ist und keine Außenluft Au aufgrund entsprechender Stellung der Stellklappe 42 zur Wärmerückgewinnungseinrichtung 14 gelangen kann. Die Außenluft Au tritt mit der genannten Außenlufttemperatur von +30°C in den Wärmespeicher 22 ein, der vorzugsweise als Phasenübergangswärmespeicher 41 ausgebildet ist. Die Umluftfördereinrichtung 36 ist nicht in Betrieb. Gleiches gilt für den Wärmetauscher 26. Die Folge ist, dass der Wärmespeicher 22 durch die relativ warme Außenluft Au geladen wird, mit der Folge, dass sie mit niedrigerer Temperatur stromabwärts aus dem Wärmespeicher 22 austritt und daher in der Lage ist, den Raum 2 zu kühlen. Während der Nacht liegt die Situation gemäß Figur 5 vor, das heißt, die Temperatur der Speichermasse des Wärmespeichers 22 wird wieder abgesenkt.

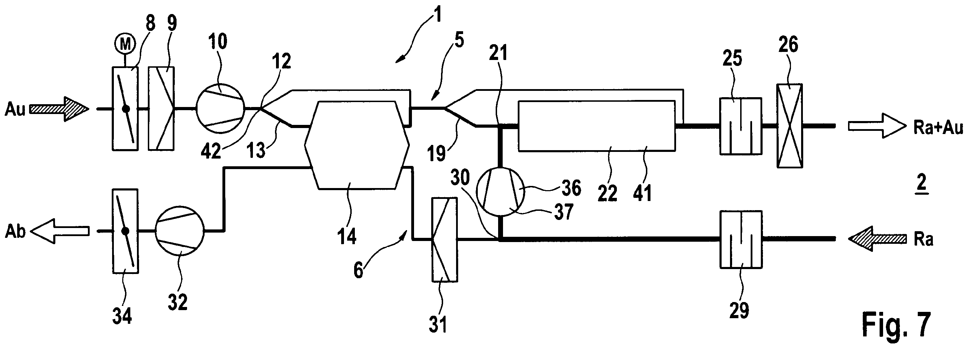

Die Figur 7 zeigt das Zu- und Abluftgerät 1 im Betriebszustand "Heißer Sommertag". Die aktiven Elemente, die in mit mitteldicker Strichstärke verdeutlichten aktiven Luftwegen liegen, entsprechen denen des Ausführungsbeispiels der Figur 2, sodass auf die dortige Beschreibung verwiesen wird. Hinzu tritt allerdings, dass die Umluftfördereinrichtung 36, die vorzugsweise als Umluftventilator 37 ausgebildet ist, betrieben wird, das heißt, es wird ein Anteil der Raumluft Ra des Abluftwegs 6 mittels der Umluftfördereinrichtung 36 in den Zuluftweg 5 gefördert, sodass sich diese Raumluft Ra stromaufwärts des Wärmespeichers 22, der wiederum vorzugsweise als Phasenübergangswärmespeicher 41 ausgebildet ist, mit der dort eintreffenden Außenluft Au mischt und die so gebildete Mischluft (Au + Ra) den Wärmespeicher 22 durchströmt und in den Raum 2 gelangt. Der aktive Umluftweg ist mit ganz dicker Strichstärke verdeutlicht. Es ergibt sich beispielsweise folgende Situation: Es wird davon ausgegangen, dass der Raum 2 eine Kühlung erfordert. Die Außenluft betrage +36°C. Der von der Zuluftfördereinrichtung 10 zugeführte Volumenstrom der Außenluft Au betrage den geforderten Frischluftvolumenstrom. Die Abluft Ab habe eine Temperatur von 26°C. Der erste Bypass 16 ist nicht aktiv. Die Wärmerückgewinnungseinrichtung 14 ist aktiv und weist eine Arbeitsweise von 70% auf, sodass die Außenluft Au die Wärmerückgewinnungseinrichtung 14 mit 29°C verlässt. Stromabwärts der Einmündung 21 liegt Mischluft vor, die aus Raumluft Ra und über den Verzweigungsweg 19 zugeführte Außenluft Au besteht. Diese Mischluft tritt in den Wärmespeicher 22 ein, der vorzugsweise als Phasenübergangswärmespeicher 41 ausgebildet ist. Aufgrund der Umluft, also der von der Umluftfördereinrichtung 36 geförderten Raumluft Ra, erhöht sich der Volumenstrom im entsprechenden Teil des Zuluftwegs 5 und des Abluftwegs 6 (gekennzeichnet mit ganz dicker Strichstärke). Eine Nachheizung im Wärmetauscher 26 entfällt. Aufgrund der zusätzlichen Umluft wird der Wärmespeicher 22 mit großem Luftvolumenstrom geladen. Damit erreicht der Wärmespeicher 22 seine höchste Kühlleistung, sodass entsprechend gekühlte Mischluft (Ra + Au) in den Raum 2 eintritt.

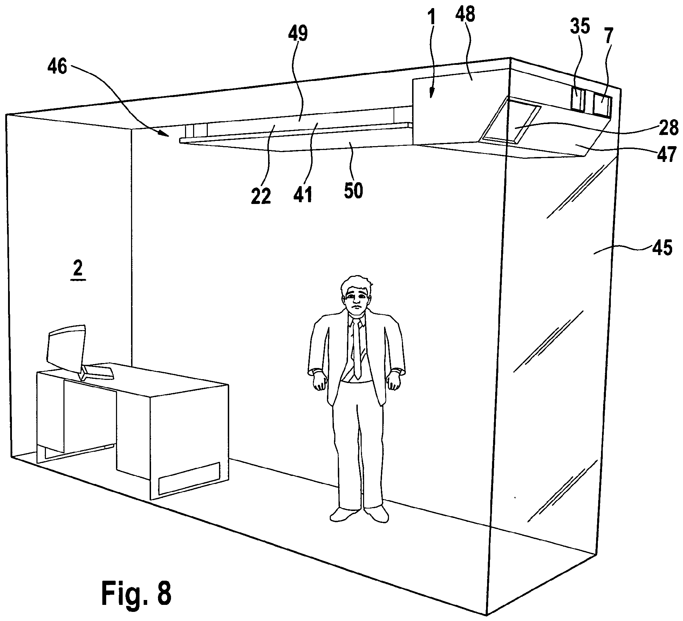

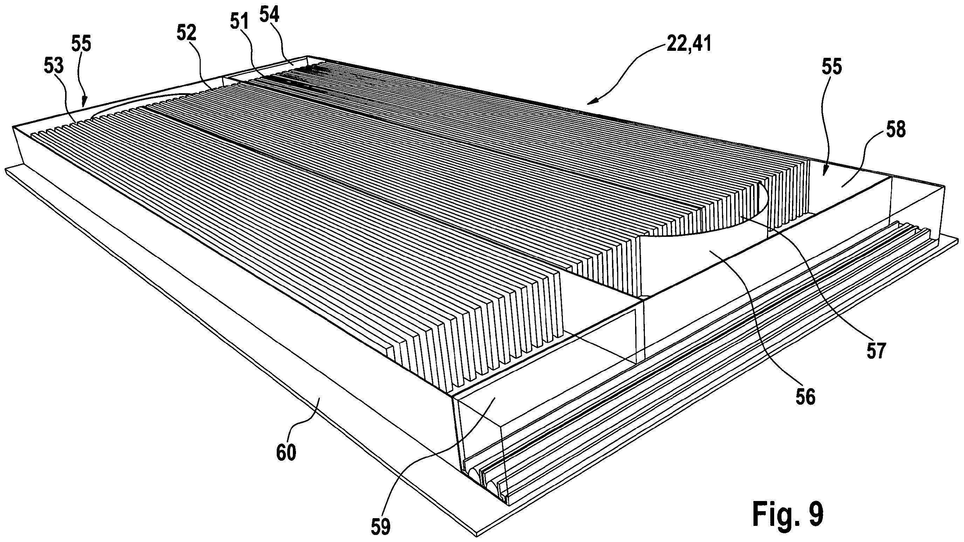

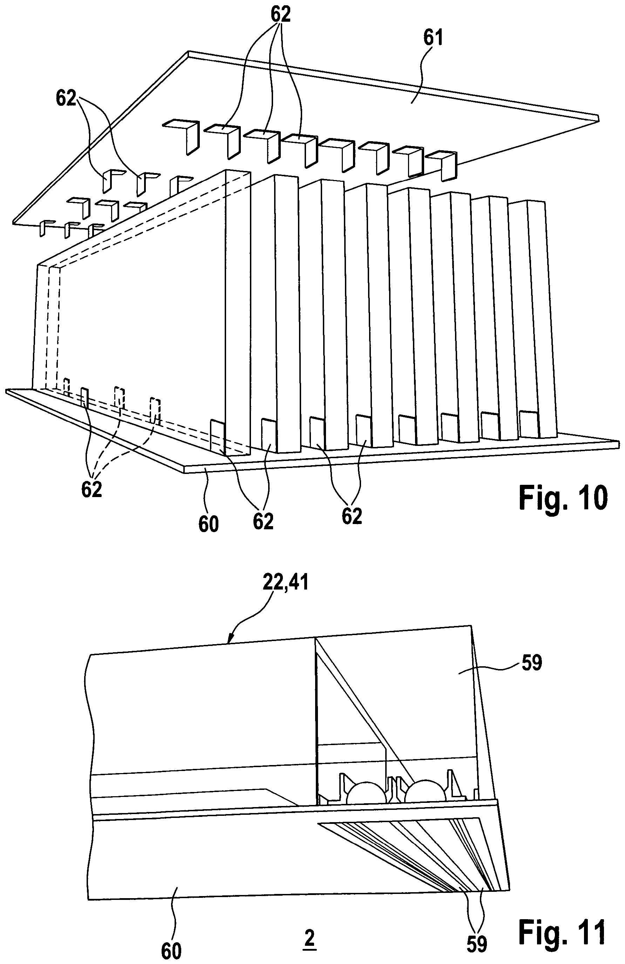

Die Figur 8 zeigt ein praktisches Ausführungsbeispiel eines Zu- und Abluftgeräts 1, das im Deckenbereich 46 des Raumes 2 angeordnet ist. Der Raum 2 weist zum Beispiel eine raumhoch verglaste Fassade 45 auf. Im oberen Bereich der Verglasung 45 liegt der Außenlufteinlass 7 und der Abluftauslass 35 des Zu- und Abluftgeräts 1. Außenlufteinlass 7 und Abluftauslass 35 führen nach außen. In der Nähe der Fassade 45, jedoch innerhalb des Raumes 2, ist an dem Zu- und Abluftgerät 1 der Raumlufteinlass 28 angeordnet. Das Zu- und Abluftgerät 1 weist ein im Wesentlichen quaderförmiges, jedoch mit Schrägwand 47 versehenes Gehäuseteil 48 sowie ein großflächiges und nur eine geringe Höhe aufweisendes Gehäuseteil 49 auf. Im Gehäuseteil 49 ist der Wärmespeicher 22 untergebracht, der vorzugsweise als Phasenübergangswärmespeicher 41 ausgebildet ist. Das Gehäuseteil 48 nimmt die übrigen Komponenten des Zu- und Abluftgeräts 1 auf. Die Figuren 9 bis 11 verdeutlichen den Aufbau des Wärmespeichers 22, der als Deckensegel 50 des Raumes 2 ausgebildet ist. Er weist - gemäß Figur 9 - mehrere, insbesondere drei Kammern 51 bis 53 auf, in denen PCM-Speichermaterial als längliche, mit Abstand zueinander angeordnete Speicherplatten untergebracht ist. Die Höhe des Deckensegels 50, das im Kühlfalle des Raums 2 ein Kühlsegel bildet, beträgt beispielsweise nur cirka 100 mm. Der Eingang des Wärmespeichers 22 befindet sich in der Kammer 51 und ist mit dem Bezugszeichen 54 versehen. Die dort eintretende Außenluft Au (oder Mischluft) streicht entlang des plattenförmigen PCM-Speichermaterials bis in eine Umlenkzone 55, die ein Luftleitblech 56 aufweist, derart, dass die ankommende Luft in zwei Teilströme unterteilt wird, von denen der eine eine Teilkammer 57 und der andere eine Teilkammer 58 durchströmt und dabei jeweils um 180° umgelenkt wird. Es erfolgt dann ein Durchströmen der Kammer 52, an deren Ende wiederum eine Umlenkzone 55 - wie vorstehend beschrieben - angeordnet ist, sodass die Luft anschließend die Kammer 53 durchströmt und in eine Luftverteilkammer 59 gelangt, von der aus sie aus fassadenfernen Schlitzauslässen 59 (Figur 11) in den Raum 2 austreten kann. Eine Bodenplatte 60, die in Wärmekontakt mit den Speicherplatten steht, wirkt im Raum 2 als Kühlsegel.

Die Figur 10 verdeutlicht, wie die PCM-Platten des Wärmespeichers 22 gehalten werden. Vorzugsweise ist die Bodenplatte 60 und eine Deckenplatte 61 mit Haltewinkeln 62 versehen, die wechselseitig die Speicherplatten - über ihre Länge gesehen - abstützen und daher beabstandet zueinander in Position halten, sodass zwischen ihnen Luftströmungswege geschaffen sind.

Aufgrund der Erfindung wird eine dezentrale Wärmerückgewinnungs-Speicher-Einheit geschaffen, die als dezentrales Zu- und Abluftgerät 1 ausgebildet ist und eine Wärmerückgewinnung mit einem Energiespeicher kombiniert, sodass eine optimale Nutzung von frei verfügbarer Kühl- und Heizenergie in Abluft und Außenluft zur Verfügung steht. Es treten minimale (bestenfalls keine) Energiekosten für Heizen und/oder Kühlen durch optimale Nutzung und Speicherung der Energie in Abluft und Außenluft auf. Es ist lediglich die Energie aufzubringen, die für die Ventilatoren erforderlich ist. Die Betriebsführung kann so gestaltet sein, dass eine optimale Be- und Entladung des Speichers, insbesondere Phasenübergangswärmespeichers, vorliegt.

## Patentansprüche

1. Dezentrales Zu- und Abluftgerät (1) für mindestens einen Raum (2) eines Gebäudes oder dergleichen, mit einer in einem Zuluftweg (5) liegenden Zuluftfördereinrichtung (10) und mit einer in einem Abluftweg (6) liegenden Abluftfördereinrichtung (32), wobei Zuluftweg (5) und Abluftweg (6) mittels einer Wärmerückgewinnungseinrichtung (14) im Wärmeaustausch zueinander bringbar sind und im Zuluftweg (5) mindestens ein Wärmespeicher (22) angeordnet ist, und wobei der Zuluftweg (5) einen den Wärmespeicher (22) wahlweise umgehenden Bypass (24) aufweist, **dadurch gekennzeichnet, dass** der Abluftweg (6) über eine Umluftfördereinrichtung (36) mit dem Zuluftweg (5) strömungstechnisch verbunden ist, wobei die Umluftfördereinrichtung (36) zwischen der Wärmerückgewinnungseinrichtung (14) und dem Wärmespeicher (22) in den Zuluftweg (5) strömungstechnisch einmündet.

2. Zu- und Abluftgerät nach Anspruch 1, **dadurch gekennzeichnet, dass** der Wärmespeicher (22) ein Phasenübergangswärmespeicher (41) ist.

3. Zu- und Abluftgerät nach einem der vorhergehenden Ansprüche, **dadurch gekennzeichnet, dass** der Wärmespeicher (22) mindestens eine Speichermasse, insbesondere aus mindestens einem Phasenübergangsmaterial (PCM = phase change material) aufweist.

4. Zu- und Abluftgerät nach einem der vorhergehenden Ansprüche, **dadurch gekennzeichnet, dass** der Zuluftweg (5) einen die Wärmerückgewinnungseinrichtung (14) wahlweise umgehenden, weiteren Bypass (16) aufweist.

5. Zu- und Abluftgerät nach einem der vorhergehenden Ansprüche, **dadurch gekennzeichnet, dass** stromabwärts des Außenlufteinlasses (7) ein Zuluftfilter (9) angeordnet ist.

6. Zu- und Abluftgerät nach einem der vorhergehenden Ansprüche, **dadurch gekennzeichnet, dass** die Zuluftfördereinrichtung (10) zwischen der ersten Verschlusseinrichtung (8) und der Wärmerückgewinnungseinrichtung (14), insbesondere zwischen dem Zuluftfilter (9) und der Wärmerückgewinnungseinrichtung (14), liegt.

7. Zu- und Abluftgerät nach einem der vorhergehenden Ansprüche, **dadurch gekennzeichnet, dass** - in Strömungsrichtung des Zuluftwegs (5) betrachtet - der Wärmespeicher (22) stromabwärts zur Wärmerückgewinnungseinrichtung (14) liegt.

8. Zu- und Abluftgerät nach einem der vorhergehenden Ansprüche, **dadurch gekennzeichnet, dass** stromabwärts des Wärmespeichers (22) ein Wärmetauscher (26) angeordnet ist.

9. Zu- und Abluftgerät nach einem der vorhergehenden Ansprüche, **dadurch gekennzeichnet, dass** die Abluftfördereinrichtung (32) stromabwärts der Wärmerückgewinnungseinrichtung (14) liegt.

10. Verfahren zum dezentralen Lüften und/oder dezentralen Klimatisieren mindestens eines Raumes (2) eines Gebäudes oder dergleichen, unter Verwendung eines Zu- und Abluftgeräts (1) nach einem oder mehreren der vorhergehenden Ansprüche, bei dem Außenluft (Au) dem Raum (2) zugeführt und Raumluft (Ra) als Abluft nach außen abgeführt wird und wobei Kälteenergie oder Wärmeenergie der Abluft zum Kühlen oder Erwärmen der Außenluft (Au) verwendet wird und Kälteenergie oder Wärmeenergie der Außenluft (Au) gespeichert und bei Bedarf für die Kühlung oder Erwärmung der in den Raum (2) geführten Luft, insbesondere Außenluft (Au), genutzt wird.

11. Verfahren nach Anspruch 10, **dadurch gekennzeichnet, dass** Raumluft (Ra) als mit der gespeicherten Kälteenergie oder der gespeicherten Wärmeenergie behandelte Umluft in den Raum (2) zurückgeführt wird.

12. Verfahren nach einem der vorhergehenden Ansprüche, **dadurch gekennzeichnet, dass** der Umluft Außenluft (Au) zugeführt wird.

## Claims

1. A decentralised supply and exhaust air unit (1) for at least one room (2) of a building or the like, comprising a supply air delivery device (10) located in a supply air path (5) and comprising an exhaust air delivery device (32) located in an exhaust air path (6), wherein the supply air path (5) and the exhaust air path (6) can be brought together in heat exchange by means of a heat recovery device (14) and at least one heat storage tank (22) is arranged in the supply air path (5), and wherein the supply air path (5) has a bypass (24) optionally bypassing the heat storage tank (22), **characterised in that** the exhaust air path (6) is fluidly connected to the supply air path (5) via a recirculating air device (36), wherein the recirculating air device (36) fluidly ends in the supply air path (5) between the heat recovery device (14) and the heat storage tank (22).

2. The supply and exhaust air unit according to claim 1, **characterised in that** the heat storage tank (22) is a phase change heat storage tank (41).

3. The supply and exhaust air unit according to any one of the preceding claims, **characterised in that** the heat storage tank (22) has at least one storage mass, more particularly consisting of at least one phase change material (PCM).

4. The supply and exhaust air unit according to any one of the preceding claims, **characterised in that** the supply air path (5) has a further bypass (16) optionally bypassing the heat recovery device (14).

5. The supply and exhaust air unit according to any one of the preceding claims, **characterised in that** a supply air filter (9) is arranged downstream of the outside air inlet (7).

6. The supply and exhaust air unit according to any one of the preceding claims, **characterised in that** the supply air delivery device (10) is located between the first closing device (8) and the heat recovery device (14), more particularly between the supply air filter (9) and the heat recovery device (14).

7. The supply and exhaust air unit according to any one of the preceding claims, **characterised in that** - as viewed in the flow direction of the supply air path (5) - the heat storage tank (22) is located downstream of the heat recovery device (14).

8. The supply and exhaust air unit according to any one of the preceding claims, **characterised in that** a heat exchanger (26) is arranged downstream of the heat storage tank (22).

9. The supply and exhaust air unit according to any one of the preceding claims, **characterised in that** the exhaust air delivery device (32) is located downstream of the heat recovery device (14).

10. A method for decentralised ventilating and/or decentralised air-conditioning of at least one room (2) of a building or the like, using a supply and exhaust air unit (1) according to any one or more of the preceding claims, wherein outside air (Au) is supplied to the room (2) and room air (Ra) is exhausted to the outside as exhaust air, and wherein cooling energy or thermal energy of the exhaust air is used to cool or heat the outside air (Au) and cooling energy or thermal energy of the outside air (Au) is stored and, if required, used for cooling or heating the air passed into the room (2), more particularly the outside air (Au).

11. The method according to claim 10, **characterised in that** the room air (Ra) is returned into the room (2) as recirculating air that has been treated with the stored cooling energy or the stored thermal energy.

12. The method according to any one of the preceding claims, **characterised in that** outside air (Au) is supplied to the recirculating air.

## Revendications

1. Appareil à air entrant et à air sortant (1) décentralisé pour au moins une pièce (2) d'un bâtiment ou similaire, avec un dispositif d'exploitation de l'air entrant (10) se trouvant dans une voie d'air entrant (5) et avec un dispositif d'exploitation de l'air sortant (32) se trouvant dans une voie d'air sortant (6), la voie d'air entrant (5) et la voie d'air sortant (6) pouvant être mises mutuellement en échange de chaleur au moyen d'un dispositif de récupération de chaleur (14) et au moins un accumulateur de chaleur (22) étant disposé dans la voie d'air entrant (5) et la voie d'air entrant (5) présentant un bypass (24) contournant sélectivement l'accumulateur de chaleur (22), **caractérisé en ce que** la voie d'air sortant (6) est reliée fluidiquement à la voie d'air entrant (5) par un dispositif d'exploitation de l'air de circulation (36), le dispositif d'exploitation de l'air de circulation (36) entre le dispositif de récupération de chaleur (14) et l'accumulateur de chaleur (22) débouchant fluidiquement dans la voie d'air entrant (5).

2. Appareil à air entrant et à air sortant conformément à la revendication n°1, **caractérisé en ce que** l'accumulateur de chaleur (22) est un accumulateur de chaleur à changement de phase (41).

3. Appareil à air entrant et à air sortant conformément à l'une des revendications précédentes, **caractérisé en ce que** l'accumulateur de chaleur (22) présente au moins une masse d'accumulation, en particulier provenant au moins d'un matériau à changement de phase (PCM = phase change material).

4. Appareil à air entrant et à air sortant conformément à l'une des revendications précédentes, **caractérisé en ce que** la voie d'air entrant (5) présente un autre bypass (16) contournant sélectivement le dispositif de récupération de chaleur (14).

5. Appareil à air entrant et à air sortant conformément à l'une des revendications précédentes, **caractérisé en ce qu'**un filtre à air entrant (9) est disposé en aval de l'entrée d'air extérieur (7).

6. Appareil à air entrant et à air sortant conformément à l'une des revendications précédentes, **caractérisé en ce que** le dispositif d'exploitation de l'air entrant (10) se trouve entre le premier dispositif de fermeture (8) et le dispositif de récupération de chaleur (14), en particulier entre le filtre à air entrant (9) et le dispositif de récupération de chaleur (14).

7. Appareil à air entrant et à air sortant conformément à l'une des revendications précédentes, **caractérisé en ce que**, vu dans le sens du flux de la voie d'air entrant (5), l'accumulateur de chaleur (22) est situé en aval du dispositif de récupération de chaleur (14).

8. Appareil à air entrant et à air sortant conformément à l'une des revendications précédentes, **caractérisé en ce qu'**un échangeur de chaleur (26) est disposé en aval de l'accumulateur de chaleur (22).

9. Appareil à air entrant et à air sortant conformément à l'une des revendications précédentes, **caractérisé en ce que** le dispositif d'exploitation de l'air sortant (32) est situé en aval du dispositif de récupération de chaleur (14).

10. Procédé pour l'aération décentralisée et/ou la climatisation décentralisée d'au moins une pièce (2) d'un bâtiment ou similaire, en utilisant un appareil à air entrant et à air sortant (1) conformément à une ou plusieurs des revendications précédentes, par lequel de l'air extérieur (Au) est amené dans la pièce (2) et l'air ambiant (Ra) est évacué vers l'extérieur en tant qu'air sortant et l'énergie de refroidissement ou l'énergie thermique de l'air sortant étant utilisée pour le refroidissement ou le réchauffement de l'air extérieur (Au) et l'énergie de refroidissement ou l'énergie thermique de l'air extérieur (Au) étant stockée et utilisé, le cas échéant, pour le refroidissement ou le réchauffement de l'air amené dans la pièce (2), en particulier l'air extérieur (Au).

11. Procédé conformément la revendication n°10, **caractérisé en ce que** l'air ambiant (Ra) est recyclé dans la pièce (2) comme air de circulation traité avec l'énergie de refroidissement stockée ou l'énergie thermique stockée.

12. Procédé conformément l'une des revendications précédentes, **caractérisé en ce que** de l'air extérieur (Au) est amené à l'air de circulation.
